## Europäisches Patentamt

## European Patent Office

## Office européen des brevets

(11) Publication number: **0 122 736**

**B1**

(12) **EUROPEAN PATENT SPECIFICATION**

(45) Date of publication of patent specification: **07.02.90**

(51) Int. Cl.⁵: **C 25 B 9/00, H 01 M 8/24**

(21) Application number: **84301883.9**

(22) Date of filing: **20.03.84**

(60) Divisional application **89109250.4** filed on **20/03/84.**

(54) **Filter press electrochemical cell with improved fluid distribution system.**

(30) Priority: **21.03.83 US 477529**

(43) Date of publication of application:
**24.10.84 Bulletin 84/43**

(45) Publication of the grant of the patent:
**07.02.90 Bulletin 90/06**

(84) Designated Contracting States:
**BE CH DE FR GB IT LI NL SE**

(56) References cited:
**DE-A-1 421 051**
**GB-A-2 093 263**
**US-A-4 233 146**
**US-A-4 339 324**
**US-A-4 425 215**

**JOURNAL OF CHEMICAL TECHNOLOGY AND BIOTECHNOLOGY, vol. 30, no. 12, December 1980, pages 711-720, Oxford, GB; M.D. BIRKETT et al.: "Design concepts and construction of bipolar filterpress cells"**

(73) Proprietor: **REILLY INDUSTRIES, INC.**
**1510 Market Square Center**
**Indianapolis Indiana 46204 (US)**

(72) Inventor: **Toomey, Joseph E., Jr.**
**2035 Rosedale Drive**
**Indianapolis Indiana 46227 (US)**

(74) Representative: **Bannerman, David Gardner et al**
**Withers & Rogers 4 Dyer's Buildings Holborn**
**London, EC1N 2JT (GB)**

Courier Press, Leamington Spa, England.

# Description

This invention relates generally to the field of electrochemistry, and in particular to a fluid distributor plate for use in a filter press electrochemical cell, and to a filter press electrochemical cell arrangement including at least one such plate.

Historically, the design of electrochemical cells has been oriented toward the processes for which they were to be used. The result is that there are many cell designs of limited utility. For instance, the electrolysis of sodium chloride solutions has dominated industrial electrochemistry but the cells used for this purpose are not applicable to other processes, particularly organic electrochemistry. While a certain amount of technology crossover is possible, as a general rule, these prior art cells work only marginally well at best in processes for which the cells were not specifically designed.

The advances which have been made in the design of these process-oriented cells have evoked interest in designing cells which would be applicable to a variety of different processes, without making major concessions on process performance in any particular case. Examples of these advances which have given credibility to the idea of a truly multipurpose cell design are the development of stable ion exchange membranes, the commercial availability of improved electrode materials such as the dimensionally stable anode, the availability of improved plastics from which the electrically nonconductive parts of the cell can be made, and advances in electrochemical engineering science.

With regard to organic electrochemistry, cost and other factors of cell design development have often not justified process-oriented cells. For example, the gathering of engineering data, construction and testing of cell prototypes, and problems of achieving a successful cell whether process-oriented or multipurpose, have caused companies engaged in chemical production to be reluctant to launch major efforts in mechanical design engineering where adequate economic justification was not present. The best economic justification is, of course, with a large-volume product. Hence, there has been more reluctance and even more of a need for a multipurpose cell in the production of intermediate- and small-volume chemical products.

Most electrochemical cells regardless of design have several common components. These are a pair of electrodes corresponding to an anode and a cathode, a cell body or frame, and some type of separator if a divided cell is desired. Variations of this basic cell have included flat plate and capillary designs, packed bed and fluidized bed designs, and even pumped slurry electrode cells. Of these, the flat plate electrode cell is most common, and is typically used in a filter press arrangement composed of any number up to one hundred or more of individual cell units or compartments formed in a single unified cell bank.

Two types of fluid and current flow are possible in such a collection or bank of cells. One is series flow where the discharge of fluid from a preceding cell is routed to the inlet of the next cell, this routing being accomplished internally within the cell body or externally using pipes, conduits, tubes or manifolds. In a similar fashion, a series or bipolar flow of electrical charge (current) can be accomplished, for example, by connecting the anode of the preceding cell to the cathode of the next cell in either a galvanic or electrogenerative cell arrangement. The other type is parallel or monopolar charge flow, which routes fluid or current to the whole collection of cells at one time from a common source or supply. Again, this can be accomplished internally or externally of the cell framework.

The preferred mode of operating a cell bank with regard to this fluid and charge flow is determined to a large extent by the process involved. Parallel fluid flow is generally preferred for many electrochemical processes as is bipolar electrical connection. However, a notable disadvantage of bipolar connection is that a certain amount of current is conducted by the fluid in connecting manifolds. This so-called by-pass current reduces cell efficiency since this flow of charge does no useful chemical work. Preferred spacial orientations of a cell bank may also exist, especially where gases formed during a particular electrolysis cause losses in efficiency by increasing resistance to current flow.

Two important features of an electrochemical cell design are the electrode and the fluid distribution network. The usable surface area of the electrode determines in part the production rate of the cell, and thus a goal of cell design development is to create as much electrode surface area within as small a cell volume as possible without altering or disturbing the other parameters of cell operation in a detrimental way. Toward this end, electrodes composed of packed or fluidized particles, expanded metal mesh, and reticulated materials such as carbon "sponges" have been developed. Most of these enhanced-surface-area (ESA) electrodes are permeable to the fluid within the cell and give rise to two types of fluid flow within the cell compartment. The flow-through type routes fluid parallel to charge flow and has been accomplished in various cell designs including the filter-press type. The flow-by routes fluid perpendicular to charge flow and has been accomplished particularly in cylindrical cell geometries, but has not been shown commercially viable in filter press cells to the applicant's knowledge.

Fewer advances have been made in the design of fluid distributors for particular use in organic electrochemistry. Distributors employing both internal and external manifold systems have been used. The important consideration in such networks is to connect the manifold to the cell in such a way as to evenly distribute fluid from side to side and across the thickness of the electrode compartment in each cell. Little concern appears to be given to fluid distribution in the case of prior art series flow cell banks. This is the case with water electrolysers, an example of which is disclosed in US—A—4,339,324 (Haas). That document discloses a multi-cell gas generator where each cell includes as fluid distributor plate with a central opening and tapering channels at opposite ends for the entry of fluid and the discharge of the evolved gases. In the case of parallel fluid connection between cells, there is the additional criteria of needing equal flow into each cell connected in parallel to avoid adverse effects caused by mass- and heat-transfer variations. Other advantages also exist with even inter-cell distribution and would be obvious to those skilled in the art.

The usual approach to fluid distribution has been to accomplish the task in as small a space as possible. Most fluid distributors consist of a multitude of channels or orifices which attempt, through various means, to equalize and distribute flow rates between them. A disadvantage of such designs is the tendency of these channels to become clogged with particulate matter thereby disrupting the even distribution of fluid or, in some cases, actually stopping fluid flow altogether. Another disadvantage, especially for electrochemical cells, is the tendency of these small channels to prevent rapid release of bubbles in the fluid which can disrupt even fluid distribution as well as cause increased cell resistance to current flow. Still yet another disadvantage is that such short distribution networks tend to maximize by-pass current losses when bipolar electrical connection between cells is used. In commercial-sized cells, all of these considerations are quite important to the optimum and efficient operation of the electrolysis reaction.

These prior art distribution networks have also suffered from having restricted supply and discharge openings and other complicating barrier structures or other constrictions in the fluid path which render them more prone to clogging, gas blockage, maldistribution or channelling of fluid, and other maladies with attendant and unavoidable harmful effects. Such structures add complexity and increased design and maintenance costs to the cell, as do the lattices, grooves, or goffering often found on exposed electrode surfaces or within cell compartments to supposedly promote better fluid distribution.

An objective of the invention is to provide a distributor plate for an electrochemical cell of the filter press type, having the versatility to be used efficiently in a great many electrochemical processes without the problems and complexities attendant prior art designs. The distributor plate for use in an electrochemical cell of the filter press type that is the subject of this patent application provides continuous, controlled and even distribution of electrolyte between cell units when connected in parallel and from side to side and across the thickness of reaction chambers in individual cells, regardless of whether parallel or series flow connection is used.

According to one aspect of the invention, there is provided a fluid distributor plate for use in an electrochemical cell of the filter press type, the plate having a central opening defining a reaction chamber extended at opposite ends by tapering channels, each of which comprises a fluid inlet or outlet leading into a passage having a reduced cross-sectional area where it meets the inlet or outlet relative to the inlet or outlet in order to accomplish a pressure drop in the fluid and leading in turn into a channel portion having diverging sides to deliver fluid from side to side and across the thickness of the chamber and terminating at the central opening at which point the channel portion has a width not greater than five times its length nor less than twice the thickness of the plate.

The fluid inlets and outlets correspond to supply and discharge openings for electrolyte to flow through the reaction chamber or compartment defined by the central opening. The passages of reduced cross-section which lead into the tapering channels introduce a pressure drop in fluid flowing between the fluid inlets or outlets and the central opening. By constructing the channel portion having diverging sides such that its width at the central opening is not greater than 5 times its length nor less than twice the thickness of the plate where this channel portion meets the central opening, the applicants are able to achieve a uniform distribution and removal of electrolyte from side to side and across the thickness of the central opening. Significantly, these advantageous flow characteristics are accomplished without the need for extraneous barriers, channels, projections or other means for assisting in distributing the electrolyte between or within each cell of a filter press cell arrangement as found in prior art designs. Moreover, excellent fluid distribution occurs at low flow rates.

According to another aspect of the invention there is provided a filter press electrochemical cell arrangement including one or more cell units held within a frame, wherein each unit comprises two or more electrodes and one or more fluid distributor plates as defined above.

Thus, the applicant's distributor plate may be positioned between juxtaposed planar electrode plates in a filter press configuration comprised of one or more individual cell units held within a frame. Adjacent electrode plates have at least one fluid inlet or outlet therein which aligns with one of the inlets or outlets in the distributor plate and completes an internal manifold system for flowing electrolyte through the cell from an external source of supply. Parallel or series fluid and current flows are possible. So are differing cell geometries, although plates that are rectangular in shape and define rectangular inner chambers are preferred. Spacer plates having coextensive central openings and holes mating with the inlets or outlets are available to separate the distributor and electrode plates, as are means employing these spacer plates, for example, to fill the central cell chamber with conductive high surface-area materials such as expanded metal mesh, metal wools, rods or cylinders, spheres, beads or other particulate matter such as carbon or lead for a packed bed arrangement.

In an alternative embodiment in which one or more divided cells are desired, the preferred distributor plate is provided with two second inlets or outlets with corresponding mating holes in adjacent electrode plates. Each second inlet or outlet is in turn symmetric with a first inlet or outlet in the plate about at least one axis of rotation through the centre of the distributor plate itself. In this regard, most preferred is three degrees of rotational symmetry for the greatest interchangeability and versatility of the applicant's invention.

In operation, electrolyte enters the applicant's preferred cell from an external supply through the internal manifold system formed by the aligned first inlets in the juxtaposed electrode and distributor plates. The reduced cross section in the passage into which the inlet leads produces a pressure difference which equalizes the distribution of fluid throughout the cell bank if more than one cell is arranged in parallel. The preferred length of this passage serves to achieve a substantially normal velocity distribution in the electrolyte as it then enters the channel portion with diverging sides. The relation between the width and length dimensions of this channel portion allows the electrolyte flow to be distributed from side to side and across the cell compartment as it enters the central opening that defines the reaction chamber. After passing through this central opening, the electrolyte is removed through corresponding diverging wall channel portions, reduced cross-section passages and aligned outlets in opposite ends of the adjoining electrode and distributor plates.

The applicant's experience has been that many advantages are attained with his preferred distributor and cell arrangement. These include the elimination of fluid channelling and blockage by particulate matter or gas bubbles, lower flow rates to achieve adequate distribution, simplicity of design, lower construction costs, enhanced interchangeability of cell parts, and fewer cell parts which can make assembly and maintenance easier. The applicant's design has the versatility to be used efficiently in a great many electrochemical applications, and the special advantages of being able to be used with known ESA electrodes in a filter press arrangement. It can hold these porous or packed bed electrodes in place without additional devices or complex designs, and allows for great variation in the dimensions of the electrode and distributor plates in order to achieve most efficient operation in any given electrolysis reaction. Also, the design allows for the option of flow-through or flow-by fluid flow within the electrode compartment.

Other industrially important features in the applicant's preferred design are corrosion resistance, efficient sealing, avoidance of parasitic reactions or problems caused by too large a potential distribution variation in the electrode compartment, and ready manufacture of cell parts by either machining techniques or molding. Moreover, the applicant's preferred design accommodates the ability to construct cells of many types and geometries, including: undivided capillary gap, divided capillary gap; undivided normal gap with none, one or both ESA electrodes; divided normal gap with none, one or both ESA electrodes; divided with slurry electrodes, and undivided or divided planar electrode cells.

Related objects and advantages of the present invention will be apparent from the following description, which is given by way of example only, and with reference to the accompanying drawings, in which:

FIG. 1 is a top plan view of the preferred fluid distributor plate of the applicant's present invention;

FIG. 2 is an enlarged representation of the preferred channel means and configuration of the applicant's distributor plate depicted in FIG. 1;

FIG. 3 is an exploded perspective view of a single undivided cell comprising the applicant's preferred fluid distributor plate positioned between two electrode plates in a filter press electrochemical cell arrangement; and

FIG. 4 is an exploded perspective view of an alternative embodiment of the applicant's invention comprising a single divided cell incorporating the applicant's preferred fluid distributor plates in a filter press electrochemical cell arrangement.

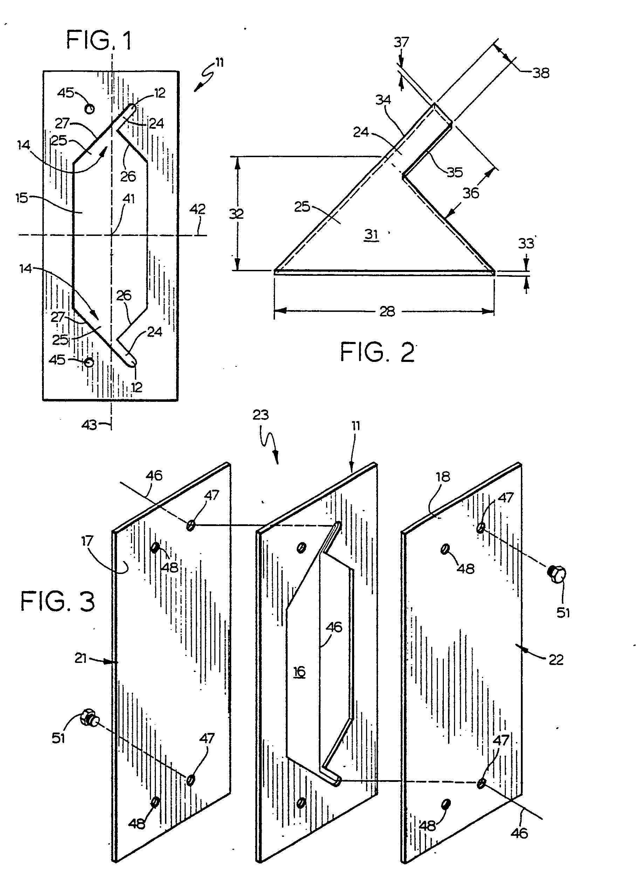

Referring now to FIG. 1, a thin sheet apparatus 11 is depicted which comprises the preferred fluid distributor plate of the present invention. This distributor plate 11 contains two first inlets or outlets 12 and tapering channels 14 connecting these inlets or outlets with opposite sides of a central opening 15 in the plate. These inlets or outlets act interchangeably as a supply and a discharge opening for the flow of electrolyte through the reaction chamber 16 defined by this central opening 15 and adjacent surfaces such as 17 and 18 of electrode plates 21 and 22 in the applicant's preferred filter press cell arrangement depicted in the exploded view 23 in FIG. 3.

The tapering channel 14 includes a first passage 24 whose orifice opening to inlet 12 has a reduced cross-sectional area which causes the incoming and outgoing electrolyte to jet through these passages 24 at increased velocity and with a corresponding drop in pressure. This restrictive passage 24 thereby serves the function of lessening the possibility of blockage or clogging at these critical points in the system while also effecting even inter-cell fluid distribution from a common external feeder and exit device (not shown) when parallel fluid manifolding is used.

The tapering channel 14 also includes a second portion 25 having diverging side walls 26 and 27 which form an opening or channel from passage 24 into the central reaction chamber 16 as shown in FIGS. 1 and 3. The function of channel portion 25 is to distribute incoming electrolyte as evenly and uniformly as possible from side to side and across the thickness of chamber 16, and then to effectively remove the electrolyte which exists through the corresponding tapering channel 14 and first outlet 12 at the opposite end of the distributor plate 11. This is accomplished in the applicant's preferred embodiment by constructing tapering channel 14 with the width 28 of opening 31 being not greater than about 5 times its length 32. By thus preventing the walls from diverging too rapidly, even distribution is achieved not so much by the pressure drop in the fluid flowing through it but rather by the shear forces normal to the axis of fluid flow (tangential shear) as the channel walls diverge. Turbulent regime fluid flow when present also aids in this distribution process.

The applicant's experience has been that his distributor plate 11 has the advantage of being virtually impervious to blockage by normally encountered particulate matter or gas bubbles in part at least because of its open design, while at the same time giving extremely even fluid distribution. His work has also shown that width 28 should not be less than about 2 times the corresponding thickness or depth 33 of the plate or central opening 15 to accomplish these beneficial results. This relationship is better shown in FIG. 2 for the preferred embodiment of the applicant's tapering channel 14. In this regard, more preferred thus far is a ratio of about 2:1 for the corresponding width and length of opening 31, and a ratio of greater than about 10:1 for its width to depth particularly in a commercial-sized cell. At this time, it is also most preferred as shown in the drawings that tapering channel 14 and opening 15 extend completely through plate 11 throughout their lengths. It is possible, however, to machine or mold differing depths for these areas within the scope and advantage of the applicant's invention.

The distribution of electrolyte throughout central opening 15, or chamber 16, of the applicant's preferred embodiment is accomplished solely by this configuration of tapering channel 14 without the need for additional fluid distribution or deflection means such as lattices, grooves, or goffering on the exposed electrode surfaces or other interposed surface areas. This success is also achieved without the need for barriers, projections, bosses or other members of this type which add to the complexity and cost of the design, and complicate the operation of such a cell, as found in the prior art.

Referring further to FIG. 2, the preferred passage of reduced cross-section area 24 provides the additional advantage of substantially normalizing the velocity distribution of electrolyte as it passages between the manifold of inlet 12 and the channel portion 25 of the distributor. This enhances the side-to-side distribution of electrolyte as it enters the opening 31 described above. To accomplish this result, the preferred configuration of passage 24 has two substantially parallel walls 34 and 35 with its length 36 being greater than the value of its normalized hydraulic radius at the orifice opening to the inlet or outlet 12. In this regard, "hydraulic radius" is a term used in fluid mechanics to arrive at a value for comparison of noncircular channel constructions, and it is equal to the cross-sectional area of a channel at a given point divided by its wetted perimeter. Since actual dimensions vary greatly with the scale on which a cell is built, this hydraulic radius is normalized for purposes of comparison and description of the applicant's invention by expressing all sides of the opening as multiples of its shortest side. In the preferred case, it would equal the normalized calculation of width 38 of passage 24 times its thickness 37 divided by the sum of two times this width 38 plus two times this thickness 37.

Also preferred from testing thus far performed is that opening 31 be generally triangular in configuration and that the passage 24 and channel portion 25 have one common planar wall. In FIGS. 1 and 2, this common wall is composed of wall portions 34 and 27, while the other two wall portions 35 and 36 experience a change in slope of the tangent lines to such walls where the passage 24 and channel portion 25 meet. Successful distribution of electrolyte is enhanced by this configuration, and by the preferred base 28 of triangular opening 31 being substantially equal to the width of central opening 15 in plate 11 at the point of contact between the two.

In large-scale cells, the total width of the central opening 15 may require a diverging-wall channel portion 25 of a length that is unwieldy and difficult to accommodate. In these cases, an alternative embodiment is to use multiple sets of inlets or outlets 12 and tapering channels 14 whose combined widths 28 approximately equal the width of the central opening 15. This is accomplished, for example, by simply positioning the sets of inlets or outlets 12 side by side to one another in the distributor plate on opposite sides of the central opening 15 with aligning holes in adjacent electrode plates.

As to configuration, the plate 11 can be circular, rectangular, hexagonal, or whatever configuration is desired for the ultimate external shape of a heat-exchanger, battery, or other electrochemical cell pack or use to which the thin sheet device will be put. The most convenient and preferred configuration is for plate 11 to be rectangular. This is also true for its central opening 15. As to materials of construction, distributor plate 11 is preferably made of polyethylene, polypropylene, polyvinylchloride or some other inert plastic or other material that is electrically nonconductive and is resistant to attack by the chemicals employed. Other examples include nylon, polysulfones, laminated epoxy or phenolic resins, various rubbers, woods, ceramics, Teflon and related plastics, Celcon and related materials, Kel-F and related materials, Plexiglas or Lexan and other related plastics. Injection or other molding techniques as well as machining techniques can be employed to fabricate these parts, depending at least in part upon the total number of parts required. To date, standard machining techniques have been used in the applicant's work.

As to dimensions, the applicant's preferred distributor plate 11 can understandably be constructed in many shapes and sizes depending in part upon the application for which it is to be used. For example, dimensions will vary significantly if a laboratory- or industrial-sized cell is desired. By way of example only, in one preferred embodiment of the applicant's work, the preferred thickness of the distributor plate 11 was about 1/8 inch. The preferred first portion 24 of channel means 14 was about 1 inch wide and about 3 inches long, and its preferred second portion 25 had a base width of about 9 inches at the central opening 15 and a preferred length of about 4-1/2 inches.

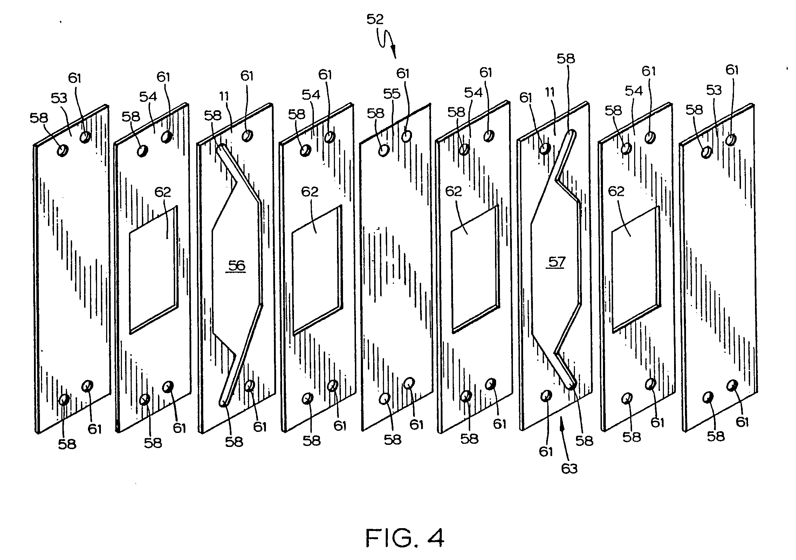

Referring now to FIGS. 1 and 3, one advantage of the applicant's preferred fluid distribution system is the versatility of its individual components and their adaptability for multiple uses. This has great significance when dealing with divided and packed bed cell arrangements as discussed with respect to FIG. 4 herein. However, even in a single undivided filter press cell as shown in FIG. 3, these advantages are apparent. At a minimum, the first inlet and outlet 12 are positioned in substantially opposite locations to one another such that there is symmetry between these holes about at least one axis of rotation through the center 41 of distributor plate 11. In FIG. 1, these axes are identified as latitudinal line or axis 42, longitudinal line or axis 43, and vertical line or axis 41 coming out of the drawing sheet.

This versatility is enhanced in the applicant's preferred plate 11 by the presence of a second inlet and outlet 45 which are spaced apart and which are each symmetrical with a different one of the first-mentioned inlet and outlet 12 about at least one axis of rotation of the plate. In fact, most preferred as shown in the applicant's plate 11 is to provide three degrees of rotational symmetry for these first and second inlets and outlets about the axes through the centre 41 of the plate. This allows the plate to be rotated, or flipped over, in any direction while maintaining the alignment and mating of the positions of first and second inlet and outlets 45 to permit the user great interchangeability in setting up his internal manifold system for a given operation. It is understood that the applicant's invention is not limited by the precise position or alignment of his preferred inlets/outlets and passages as depicted in the drawings herein. The passage 24 and two first inlets or outlets 12 in FIG. 1, for example, could just as easily be located diagonally on opposite longitudinal sides of the plate 11 with or without symmetry being present while still coming within the scope and coverage of the applicant's invention. The same is true of second inlets/outlets 45.

In operation, one or more preferred cell units 23 are employed having two electrodes and at least one of the applicant's distributor plates held in a filter press arrangement. The simplest of these is the single undivided cell configuration 23 as depicted in FIG. 3. Preferred plate 11 is positioned between two planar electrode plates 21 and 22. Separate means (not shown) are provided to press these plates tightly together and to seal their respective fluid paths from leakage. Means (not shown) are also provided for establishing an electrical potential between the corresponding anode and cathode as, for example, by connecting alternate electrode plates to opposing poles of a source of direct current. Since such general operational and constructional features of the foregoing type of electrolytic cell are well known to those skilled in the art, specific means for such activation and operation will not be discussed in detail in this application. By way of example only, it is noted that at least two devices have been commonly used in the past to compress cell components. The first positions two solid or partial plates at opposite ends of the cell with holes or other means for bolting these plates tightly together. The second is an apparatus having one fixed and one movable plate with mechanical or hydraulic rams to compress the cell components which are positioned therebetween. Both devices have been used successfully in the applicant's work thus far. Proper alignment and sealing of the electrode and distributor plates are also important, with flat gaskets or sheets having been used successfully as have O-ring seals.

A great variety exists as to possible configurations and materials suitable for use as the electrodes in the applicant's filter press cell arrangements. As mentioned previously, such electrodes include generally planar or plate forms as well as various enhanced-surface-area (ESA) electrodes such as packed or fluidized particles, expanded metal mesh, and reticulated materials such as carbon "sponges" and the like. The electrode configurations used in the applicant's preferred cell unit 23 are as conductive plates 21 and 22. Suitable electrode materials also vary greatly, including such materials as mercury, mercury amalgams, lead, lead alloys with antimony and/or silver, cadmium, titanium, silver or carbon, and others which are commonly used and available in the industry. The choice of electrode material is tied to the chemistry involved. As to suitable electrolyte solutions, it is also understood that these depend upon the electrochemistry of the reaction to be conducted and bear no relation or limitation on the scope of the applicant's present invention.

A possible flow pattern for electrolyte through the single cell 23 in FIG. 3 is indicated by line 46. Flow may be in either direction, and as seen in the drawing, corresponding holes 47 and 48 in each electrode plate 21 and 22 align with the inlets/outlets 12 in distributor plate 11 to provide for greater versatility and interchangeability of the individual component parts. The ends of the manifold defined by the unused inlets/outlets 12 and 47 are preferably sealed by threaded or other plugs such as 51 so as to route electrolyte along line 46. Alternatively, electrolyte may be fed and discharged using both sets of these inlets/outlets 12 and 47 concurrently. Establishing a bank of several such individual cell units 23 as shown in FIG. 3 is accomplished, for example, simply by continuing to alternate distributor and electrode plates whereby corresponding holes establish an internal manifold system for the supply and discharge of electrolyte into and from the several cell compartments in connection with an external source of fluid supply.

Referring now to FIG. 4, an alternate preferred cell unit or module 52 is shown which comprises a single divided cell also employing the preferred distributor plate 11 discussed above. The additions to this cell arrangement besides distributor plates 11 and electrode plates 53 are four spacer plates 54 and a central divider or separator plate 55, such as a selectively permeable membrane, which separates the adjacent catholyte and anolyte electrolysis compartments represented by numerals 56 and 57. Spacer plates 54 and separator plate 55 all have first holes 58 and second holes 61 which align and mate with the corresponding inlets/outlets in the distributor and electrode plates respectively. Spacer plates 54 also include a central opening 62 which is approximately equal in size to adjacent openings 15 in the distributor plates thereby enlarging the depth or thickness of the individual reaction chambers.

As to dimensions, the spacer plates 54 can be of any thickness, although the desired total separation of juxtaposed electrodes within each cell unit must be considered with regard to overall cell efficiency. The spacer plates are generally preferred to be less than about 2 inches in thickness as with the preferred distributor plates. Alternately, the spacer and distributor plates can be formed from a single thickness or sheet such that the formed distribution channel means 14 do not go completely through this combined plate throughout its length. Also alternately, one or more of the four spacer plates 54 in FIG. 4 can be removed or its dimensions varied without altering the essential function of the applicant's divided cell. The spacer plates can be of virtually any construction, with preferred plates 54 in the applicant's work being rectangular and of the same material indicated previously for preferred distributor plates 11.

In operation, the single divided cell 52 shown in FIG. 4 highlights the importance of the symmetry described above in the applicant's preferred structures. All components of cell unit 52 are interchangeable with corresponding components without any loss in function.

Once again, the internal manifold system in the applicant's design functions to channel electrolyte through corresponding cathode and anode compartments by means of the aligned holes in adjacent plates. Differing solutions have been used in the respective catholyte and anolyte compartments 56 and 57 simply by rotating the second distributor plate indicated by numeral 63 in the drawing to align its first inlets/outlets 58 with the series of second holes 61 in the adjoining spacer, separator, and electrode plates. As before, cell unit 52 can be repeated as many times as physically possible in arranging a multi-unit filter press cell bank. Also, the terminal electrode plates in the bank can include some capping or plugging of appropriate holes 58 and 61 to seal off the ends of the individual flow paths for the catholyte and anolyte solutions. Multiple compartment cells having more than two chambers, which are suitable for desalination and other processes, can also be formed by repeating units of the applicant's distributor plate 11 with or without spacer plates 54 and with several separator plates 55, and then by utilizing three or more separate sets of holes and fluid channel means as described above.

A further alternate embodiment which adds to the versatility of the applicant's invention is that his cell units are readily adapted to a packed bed arrangement which significantly increases the effective electrode area, production rate, mass transport, heat transport, and resulting efficiency for a given electrolysis reaction. Alternately, other types of enhanced surface-area (ESA) electrodes can also be employed with the applicant's cell design to realize these benefits. Since the general operation and construction of packed-bed cells is known to those skilled in the art, specific means will not be discussed in detail. Significantly, the applicant is not aware of any prior art method or device which combines this known packed-bed technology with a thin sheet filter press cell arrangement as in his invention.

On the matter of how to employ a packed-bed in the applicant's work, this is accomplished during assembly of the individual cell components as, for example, simply by inserting the conductive packing material into each cell chamber or compartment as it is constructed. Acceptable packing material is well known in the art, and may include lattice or woven sheet-like materials, fused or sintered particulate matter, reticulated conductive carbon materials, spherules, rods, cylinders or loose particulate matter such as carbon or lead. If loose material is desired, one alternate method of introducing the packing is by means of either a specially designed spacer or interelectrode plate. A suitable spacer plate would have a channel opening extending from the plate edge to near the top of the central opening. The particulate matter is introduced from the outside via this feeder hole until the chamber is full, and the opening is then sealed by a cap or plug to prevent leakage during operation. An optional interelectrode plate would be a flat plate inserted between the electrodes of adjacent cells also having a feeder tube from the plate edge to a point near where the top of the central cavity would be located. A mating hole in the face of this plate and the adjoining electrode plate would form an L-shaped feeder tube for introducing particulate matter through the electrode plate into the central cell chamber.

In yet another alternate embodiment, if loose particulate matter is used on only one side of a divided cell, then some means of support may be used in the unpacked electrode compartment to prevent undue stresses on the separator plate. These types of support are known to those skilled in the art and will therefore not be discussed in detail here.

While various preferred and alternate embodiments of the present invention have been described in detail in the above paragraphs, these are only representative of the many possible cell constructions within the scope of the applicant's cell design invention as described and claimed herein.

## Claims

1. A fluid distributor plate (11) for use in an electrochemical cell of the filter press type, the plate (11) having a central opening (15) defining a reaction chamber extended at opposite ends by tapering channels (14), each of which comprises a fluid inlet or outlet (12) leading into a passage (24) having a reduced cross-sectional area where it meets the inlet or outlet (12) relative to the inlet or outlet (12) in order to accomplish a pressure drop in the fluid and leading in turn into a channel portion (25) having diverging sides to deliver fluid from side to side and across the thickness of the chamber and terminating at the central opening (15) at which point the channel portion (25) has a width not greater than five times its length nor less than twice the thickness of the plate (11).

2. A distributor plate according to Claim 1 characterised in that each channel portion (25) and the central opening (15) meet at a point where they are of substantially equal width.

3. The distributor plate according to Claim 1 which includes more than one pair of tapering channels (14) extended at opposite ends of the central opening (15) with the combined widths of said channel portions (25) at each end of the central opening (15) being substantially equal to the width of said central opening (15) at the points where the central opening (15) and channel portions (25) meet.

4. The distributor plate according to any preceding claim in which said inlet or outlet (12) of each tapering channel (14) is symmetrical with the other about an axis of rotation through the centre of said plate (11).

5. The distributor plate according to any preceding claim in which each passage (24) has two substantially parallel walls (34, 35) and a length (36) sufficient to achieve a substantially normal velocity distribution in fluid passing therethrough.

6. The distributor plate according to any preceding claim in which the diverging sides of said channel portion (25) form a generally triangular-shaped opening from each passage (24) into said central opening (15) in said plate (11).

7. The distributor plate according to Claim 6 which in addition has a pair of second inlets or outlets (45) therein, each of said second inlets or outlets being symmetrical with a different inlet or outlet (12) of said passage (24) about an axis of rotation through the centre of the distributor plate (11).

8. The distributor plate according to Claim 7 in which each inlet or outlet (12) and the appropriate second hole (45) is symmetrical about all three axes of rotation through the centre of the distributor plate (11).

9. The distributor plate according to any preceding claim in which each passage (24) has a substantially constant normalized hydraulic radius throughout its length.

10. The distributor plate according to any preceding claim which is generally rectangular in configuration as is said central opening (15) therein.

11. The distributor plate according to any preceding claim which is of an electrically-nonconductive material resistant to chemical attack.

12. The distributor plate according to Claim 11 which is of a polyethylene, polypropylene or polyvinylchloride.

13. A distributor plate according to any preceding claim which is not more than about 2 inches (5.08 cm) in thickness, and in which the width of the opening of each channel portion (25) is about twice its length or less.

14. The distributor plate according to any preceding claim in which one wall (34) of each passage (24) is coplanar with a wall of the corresponding channel portion (25).

15. The distributor plate according to any preceding claims in which the length of each passage (24) is at least as great as its width.

16. The distributor plate according to Claim 15 in which each passage (24) is about 1 inch (2.54 cm) wide and about 3 inches (7.62 cm) long and each channel portion (25) has a width of act 9 inches (22.86 cm) at said central opening (15) and a length cf about $4\frac{1}{2}$ inches (11.43 cm).

17. The distributor plate according to any preceding claim in which each passage (24) has one wall (35) not coplanar with either of the diverging walls of the channel portion (25).

18. The distributor plate according to any preceding claim which includes no additional fluid channeling means to promote better fluid distribution.

19. The distributor plate according to any preceding claim in which the length of each passage (24) is equal to or greater than its normal hydraulic radius at the point where it joins the inlet or outlet (12).

20. A filter press electrochemical cell arrangement including one or more cell units held within a frame, each unit comprising two or more electrodes and one or more fluid distributor plates (11) according to any preceding claim.

21. The cell arrangement according to Claim 20 in which at least one electrode in a unit is an enhanced-surface-area electrode held within the central opening (15) of a distributor plate (11).

22. The cell arrangement according to Claim 20 in which the electrodes comprise flat electrode plates (18, 21) with the distributor plate (11) positioned between them, each of the electrode plates (18, 21) having a hole (47) therein aligned with an inlet or outlet (12) of one of the tapering channels (14) in the distributor plate (11) to form a passage extending transverse to the plates (11, 18, 21) and forming part of an internal manifold system for fluid flow through said cell unit from an external source of supply.

23. The cell arrangement according to Claim 22 in which one or more of said cell units additionally comprises a second fluid distributor plate (11) rotated through 180° relative to said first distributor plate (11) so that a first inlet or outlet (58) in said second distributor plate is aligned with a second inlet or outlet (61) of the first distributor plate (11) so that the tapering channels (14) of each distributor plate forms portions of a separate internal manifold system for the flow of separate fluids through said cell units from separate external sources of supply.

24. The cell arrangement according to Claim 23 in which each of said cell units having said second distributor plate (11) additionally comprises a separator plate (55) positioned between said juxtaposed distributor plates (11) for separating the two electrode compartments (56, 57) formed thereby, said separator plate having holes (58, 61) therein aligning with said first and second inlets or outlets (58, 61) in said distributor plate and said holes in said electrode plates for completing the internal manifold system for each cell unit.

25. The cell arrangement of any of Claims 22 to 24 additionally comprising at least one spacer plate (54) for positioning between a distributor plate (11) and an electrode plate (53), the or each spacer plate including a central opening (62) and holes (58, 61) aligning with said corresponding central opening (15) and said first and second inlets or outlets (58, 61) in said adjacent distributor plate (11).

26. The cell arrangement of Claim 25 additionally comprising at least one additional spacer plate (54) for positioning between a distributor plate (11) and a separator plate (55).

27. The cell arrangement of Claims 24 to 26 additionally comprising an amount of conductive high surface-area material filling at least one of said electrode compartments (56, 57) in at least one of said cell units thereby establishing a packed bed filter press cell arrangement.

28. The cell arrangement of Claim 27 additionally comprising means, including a sealable channel opening into at least one of said spacer (54), electrode (53) or distributor (11) plates in a cell unit, for introducing said material into said electrode compartments (56, 57) defined thereby.

29. The cell arrangement of Claim 22 additionally comprising means, including an amount of conductive high surface area material in said central opening (15) and a separator plate (55) between said distributor plate (11) and one of said electrode plates (53) in a cell unit, for establishing a packed bed filter press cell arrangement therein.

30. The cell arrangement of Claim 20 when appendant to Claim 7 in which said inlet or outlet (12) of each passage (24) and said second inlets or outlets (45) in said distributor plate (11) are symmetrical about all three axes of rotation through the centre of said distributor plate (11), said electrode plates each having holes (47, 48) aligned with each inlet or outlet (12) and second inlets or outlets (45) in the distributor plate.

31. The cell arrangement of Claim 20 when appendant to Claim 10 in which said electrode plates (53) are also generally rectangular in configuration.

32. The cell arrangement of Claim 22 additionally comprising more than one of said cell units juxtaposed with adjacent distributor plates (11) sharing a common electrode plate (17, 18, 53) positioned therebetween.

**Patentansprüche**

1. Fluid-Verteilerplatte (11) zur Verwendung in einer elektrochemischen Zelle vom Filterpressentyp, wobei die Platte (11) eine mittige Öffnung (15) aufweist, welche eine Reaktionskammer abgrenzt, die an gegenüberliegenden Enden durch eingeschnittene Kanäle (14) vergrößert ist, von denen jeder einen Fluideinlaß oder -auslaß (12) aufweist, der in einen Durchgang (24) führt, welcher dort in Bezug auf den Einlaß oder Auslaß (12) einen reduzierten Querschnitt aufweist, wo er auf den Einlaß oder Auslaß (12) trifft, um einen Druckabfall im Fluid zu erreichen, und welcher andererseits in einen Kanalabschnitt (25) mündet, der auseinanderlaufende Seiten aufweist, um Fluid auf die eine und die andere Seite und über die Breite der Kammer zu überführen, der in der mittigen Öffnung (15) endet, wo der Kanalabschnitt (25) eine Breite aufweist, die nicht größer ist als das Fünffache seiner Länge und nicht kleiner als das Zweifache der Stärke der Platte (11).

2. Verteilerplatte gemäß Anspruch 1, dadurch gekennzeichnet, daß jeder Kanalabschnitt (25) und die mittige Öffnung (15) an einer Stelle zusammentreffen, wo sie im wesentlichen eine gleiche Weite aufweisen.

3. Verteilerplatte nach Anspruch 1, welche mehr als ein Paar eingeschnittener Kanäle (14) aufweist, die sich an gegenüberliegenden Seiten der zentralen Öffnung (15) erstrecken, wobei die zusammengefügten Weiten der genannten Kanalabschnitte (25) an jedem Ende der zentralen Öffnung (15) im wesentlichen gleich sind der Weite der zentralen Öffnung (15) an den Stellen, wo die zentrale Öffnung (15) und die Kanalabschnitte (25) aufeinandertreffen.

4. Verteilerplatte nach einem der vorhergehenden Ansprüche, wobei der genannte Einlaß oder Auslaß jedes eingeschnittenen Kanals (14) in bezug auf eine durch das Zentrum der Platte (11) gehende Drehachse zueinander symmetrisch sind.

5. Verteilerplatte nach einem der vorhergehenden Ansprüche, wobei jeder Durchlaß (24) zwei im wesentlichen sich parallel erstreckende Wände (34, 35) aufweist und eine Länge (36) hat, die ausreicht, um eine im wesentlichen regelmäßige Geschwindigkeitsverteilung im durchströmenden Fluid zu erreichen.

6. Verteilerplatte nach einem der vorhergehenden Ansprüche, wobei die auseinanderlaufenden Seiten jedes Kanalabschnittes (25) eine im wesentlichen dreieckförmige Mündung aus jedem Durchlaß (24) in die mittige Öffnung (15) in der Platte (11) bilden.

7. Verteilerplatte nach Anspruch 6, mit zusätzlich einem Paar zweiter Einlässe oder Auslässe (45), wobei jeder der genannten zweiten Einlässe oder Auslässe symmetrisch in bezug auf eine Drehachse zu einem anderen Einlaß oder Auslaß (12) des Durchlasses (24) angeordnet ist, wobei die Drehachse durch den Mittelpunkt der Verteilerplatte (11) geht.

8. Verteilerplatte nach Anspruch 7, wobei jeder Einlaß oder Auslaß (12) und das zugehörige zweite Loch (45) symmetrisch in bezug auf alle drei Drehachsen sind, die durch den Mittelpunkt der Verteilerplatte (11) gehen.

9. Verteilerplatte nach einem der vorhergehenden Ansprüche, wobei jeder Durchlaß (24) einen im wesentlichen konstanten normierten hydraulischen Radius über seine Längserstreckung aufweist.

10. Verteilerplatte nach einem der vorhergehenden Ansprüche, wobei die Platte im wesentlichen rechtwinklig ausgestaltet ist, ebenso wie die zentrale Öffnung (15) in ihr.

11. Verteilerplatte nach einem der vorhergehenden Ansprüche, wobei die Platte aus einem elektrisch nicht leitenden Material besteht und chemisch inert ist.

12. Verteilerplatte nach Anspruch 11, dadurch gekennzeichnet, daß sie aus Polyethylen, Polypropylen oder Polyvinylchlorid besteht.

13. Verteilerplatte nach einem der vorhergehenden Ansprüche, wobei sie nicht mehr als etwa 5,08 cm stark ist und wobei die Weite der Öffnung in jedem Kanalabschnitt (25) etwa dem Doppelten seiner Länge oder weniger entspricht.

14. Verteilerplatte nach einem der vorhergehenden Ansprüche, wobei eine Wand (34) jedes Durchlasses (24) koplanar in bezug auf eine Wand des zugeordneten Kanalabschnittes (25) ausgerichtet ist.

15. Verteilerplatte nach einem der vorhergehenden Ansprüche, wobei die Länge jedes Durchlasses (24) zumindest so groß ist wie seine Weite.

16. Verteilerplatte nach Anspruch 15, wobei jeder Durchlaß (24) etwa 2,45 cm weit und etwa 7,62 cm lang ist und wobei jeder Kanalabschnitt (25) eine Weite (Breite) aufweist, die an der mittigen Öffnung (15) 22,86 cm beträgt, und eine Länge von etwa 11,43 cm hat.

17. Verteilerplatte nach einem der vorhergehenden Ansprüche, wobei jeder Durchlaß (24) eine Wand (35) aufweist, die nicht koplanar mit einer der auseinanderlaufenden Wände des Kanalabschnittes (25) ist.

18. Verteilerplatte nach einem der vorhergehenden Ansprüche, wobei keine zusätzlichen Fluid-Kanalisierungsmittel vorgesehen sind, um eine bessere Fluidverteilung zu erreichen.

19. Verteilerplatte nach einem der vorhergehenden Ansprüche, wobei die Länge jedes Durchlasses (24) gleich oder größer ist als der hydraulische Radius an der Stelle, wo sie mit dem Einlaß oder Auslaß (12) zusammentrifft.

20. Elektrochemische Filterpressen-Zellenanordnung mit einer oder mehreren Zelleinheiten, die in einem Rahmen gehalten sind, wobei jede Einheit eine oder mehrere Elektroden und eine oder mehrere Fluidverteilerplatten (11) gemäß einem der vorhergehenden Ansprüche aufweist.

21. Zellenanordnung gemäß Anspruch 20, wobei zumindest eine Elektrode in einer Einheit eine vergrößerte Oberfläche aufweist und in der mittigen Öffnung (15) in der Verteilerplatte (11) gehalten ist.

22. Zellenanordnung nach Anspruch 20, wobei die Elektroden flache Elektrodenplatten (18, 21) aufweisen und die Verteilerplatte (11) zwischen diesen angeordnet ist, und jede der Elektrodenplatten (18, 21) ein Loch (47) aufweist, welches in bezug auf einen Einlaß oder Auslaß eines der eingeschnittenen Kanäle (14) in der Verteilerplatte (11) ausgerichtet ist, um einen Durchlaß zu bilden, der sich quer zu den Platten (11, 18, 21) erstreckt und ein Teil eines internen Verteilersystems für eine Fluidströmung durch die Zelleneinheit aus einer externen Versorgungsquelle bildet.

23. Zellenanordnung gemäß Anspruch 22, wobei zumindest eine der genannten Zelleinheiten zusätzlich eine zweite Fluid-Verteilerplatte (11) aufweist, die um 180° in bezug auf die erste Verteilerplatte (11) gedreht ist, so daß ein erster Einlaß oder Auslaß (58) in der zweiten Verteilerplatte in bezug auf einen zweiten Einlaß oder Auslaß (61) der ersten Verteilerplatte (11) ausgerichtet ist, so daß die eingeschnittenen Kanäle (14) jeder Verteilerplatte Teile eines getrennten, internen Verteilersystems für die Strömung eines getrennten Fluids durch die genannte Zelle bilden, welches von einer getrennten externen Quelle stammt.

24. Zellenanordnung gemäß Anspruch 23, wobei jede der mit der genannten zweiten Verteilerplatte (11) ausgerüsteten Zellenanordnungen zusätzlich eine Trennplatte (55) aufweist, die zwischen den genannten aneinander angrenzenden Verteilerplatten (11) angeordnet ist, um die zwei Elektrodenfächer (56, 57) zu trennen, die hierdurch erzeugt werden, und wobei die Trennplatte Löcher (58, 61) aufweist, die in bezug auf die genannten ersten und zweiten Einlässe oder Auslässe (58, 61) in der genannten Verteilerplatte und die genannten Löcher in den Elektrodenplatten ausgerichtet sind, um das interne Verteilungssystem für jede Zelleinheit zu vervollständigen.

25. Zellenanordnung nach einem der Ansprüche 22 bis 24 mit zumindest einer Abstandsplatte (54) zur Positionierung zwischen einer Verteilerplatte (11) und einer Elektrodenplatte (53), wobei die oder jede Abstandsplatte eine zentrale Öffnung (62) und Löcher (58, 61) aufweist, die in bezug auf die zugehörige zentrale Öffnung (15) und die genannten ersten und zweiten Einlässe oder Auslässe (58, 61) in der genannten benachbarten Verteilerplatte (11) ausgerichtet sind.

26. Zellenanordnung nach Anspruch 25, wobei zusätzlich zumindest eine weitere Abstandsplatte (54) vorgesehen ist zur Positionierung zwischen einer Verteilerplatte (11) und einer Trennplatte (55).

27. Zellenanordnung nach einem der Ansprüche 24 bis 26, wobei zusätzlich leitendes, eine große Oberfläche aufweisendes Material vorgesehen ist, welches zumindest eines der genannten Elektrodenfächer (56, 57) in zumindest einer der Zelleinheiten füllt, um so eine Zellenanordnung mit einer gefüllten Filterpresse zu bilden.

28. Zellenanordnung nach Anspruch 27, wobei zusätzlich Einrichtungen vorgesehen sind, einschließlich eines abschließbaren Kanals, der in zumindest eines der folgenden Bauteile Abstandsstück (54), Elektrode (53) oder Verteilerplatte (11) in einer Zelleneinheit mündet, um das genannte Material in die genannten Elektrodenfächer (56, 57) zu überführen, die hierdurch gebildet werden.

29. Zellenanordnung nach Anspruch 22, wobei zusätzlich Einrichtungen vorgesehen sind, einschließlich einer bestimmten Menge eines leitfähigen Materials großer Oberfläche in der genannten zentralen Öffnung (15) und einer Trennplatte (55) zwischen der genannten Verteilerplatte (11) und einer der genannten Elektrodenplatten (53) in einer Zelleinheit, um eine Zellanordnung mit Filterpresse und gefülltem Bett zu bilden.

30. Zellenanordnung nach Anspruch 20, der auf Anspruch 7 rückbezogen ist, wobei der genannte Einlaß oder Auslaß (12) jedes Durchlasses (24) und die genannten zweiten Einlässe oder Auslässe (54) in der genannten Verteilerplatte (11) symmetrisch in Bezug auf alle drei Drehachsen sind, die durch das Zentrum der Verteilerplatte (11) gehen, wobei die genannten Elektrodenplatten jeweils Löcher (47, 58) aufweisen, die in bezug auf jeden Einlaß oder Auslaß (12) und zweite Einlässe oder Auslässe (54) in der Verteilerplatte ausgerichtet sind.

31. Zellenanordnung gemäß Anspruch 20, der auf Anspruch 10 rückbezogen ist, wobei jede der genannten Elektrodenplatten (53) ebenfalls im wesentlichen rechteckförmig ausgestaltet ist.

32. Zellenanordnung gemäß Anspruch 22, wobei zusätzlich mehr als eine der genannten Zelleneinheiten vorgesehen ist, die an benachbarte Verteilerplatten (11) angrenzen und eine gemeinsame Elektrodenplatte (17, 18, 53) aufweisen, die dazwischen angeordnet ist.

**Revendications**

1. Plaque de distributeur de fluides (11) destinée à l'utilisation dans une cellule électrochimique du type filtre-presse, caractérisée en ce qu'elle comporte un orifice central (15) définissant une chambre de réaction prolongée aux extrémités opposées par des canaux coniques (14), chacune d'entre elles comprenant une entrée ou une sortie de fluide (12) menant dans un passage (24) présentant une section transversale de faible surface qui rejoint l'entrée ou la sortie par rapport à l'entrée ou la sortie (12), de façon à réaliser une perte de charge dans le fluide et à le conduire à son tour dans une portion de canalisation (25) présentant des faces divergentes pour faire passer le fluide en passant d'un côté à l'autre et à travers l'épaisseur de la chambre et en fin de parcours à l'orifice central (15), à l'emplacement duquel la partie de canal (25) présente une largeur ne dépassant pas cinq fois sa longueur ni étant inférieure à deux fois l'épaisseur de la plaque (11).

2. Plaque de distributeur de fluides selon la revendication 1, caractérisée en ce que chaque partie de canal (25) et l'orifice central (15) se rejoignent en un point où ils ont une largeur sensiblement identique.

3. Plaque de distributeur selon la revendication 1, caractérisée en ce qu'elle comprend plus de deux canaux coniques (24) s'étendant aux extrémités opposées de l'orifice central (15), avec les largeurs combinées desdites parties de canal (25), à chaque extrémité de l'orifice central (15), sensiblement identiques à la largeur dudit orifice central (15) aux points où l'orifice central (15) et les parties de canal (25) se rejoignent.

4. Plaque de distributeur selon l'une quelconque des revendications précédentes, caractérisée en ce que ladite entrée ou sortie (12) de chaque canal conique (14) est symétrique par rapport à l'autre, par rapport à un axe de rotation passant par le centre de ladite plaque (11).

5. Plaque de distributeur selon l'une quelconque des revendications précédentes, caractérisée en ce que chaque passage (24) présente deux parois sensiblement parallèles (34, 35) et une longueur (36) suffisantes pour produire une distribution de vitesse sensiblement normale dans le fluide passant à travers.

6. Plaque de distributeur selon l'une quelconque des revendications précédentes, caractérisée en ce que les faces divergentes de ladite partie de canal (25) forment un orifice de forme généralement triangulaire en allant de chaque passage (24) audit orifice central (15) de ladite plaque (11).

7. Plaque de distributeur selon l'une quelconque des revendications précédentes, caractérisée en ce qu'elle présente, en plus, une deuxième entrée et sortie (45) en son sein, chacune des secondes entrée ou sortie étant symétrique à une entrée ou sortie (12) différente dudit passage (24), par rapport à un axe de rotation passant par le centre de la plaque de distributeur (11).

8. Plaque de distributeur selon la revendication 7, caractérisée en ce que chaque entrée ou sortie (12) et le second orifice approprié (45) sont symétriques par rapport aux trois axes de rotation passant par le centre de la plaque de distributeur (11).

9. Plaque de distributeur selon l'une quelconque

des revendications précédentes, caractérisée en ce que chaque passage (24) présente un rayon hydraulique normalisé sensiblement constant sur sa longueur.

10. Plaque de distributeur selon l'une quelconque des revendications précédentes, caractérisée en ce qu'elle est de configuration généralement rectangulaire, comme l'est l'orifice central (15) situé en son sein.

11. Plaque de distributeur selon l'une quelconque des revendications précédentes, caractérisée en ce qu'elle est en matériau électriquement non-conducteur, résistant aux attaques chimiques.

12. Plaque de distributeur selon la revendication 11, caractérisée en ce qu'elle est composée en polyéthylène, en polypropylène ou en chlorure de polyvinyle.

13. Plaque de distributeur selon l'une quelconque des revendications précédentes, caractérisée en ce qu'elle est d'une épaisseur ne dépassant pas 5,08 cm (2 pouces), et dont la largeur d'orifice de chaque partie de canal (25) est d'à peu près deux fois sa longueur ou moins.

14. Plaque de distributeur selon l'une quelconque des revendications précédentes, caractérisée en ce qu'une paroi (34) de chaque passage (24) est coplanaire à une paroi de la partie de canal (25) correspondante.

15. Plaque de distributeur selon l'une quelconque des revendications précédentes, caractérisée en ce que la longueur de chaque passage (24) est au moins égale à sa largeur.

16. Plaque de distributeur selon la revendication 15, caractérisée en ce que chaque passage (24) présente une largeur d'à peu près 2,54 cm (1 pouce) et une longueur d'à peu près 7,62 cm (3 pouces) et chaque partie de canal (25) présente une largeur d'à peu près 22,86 cm (9 pouces) de l'orifice (15) et une longueur d'à peu près 11,43 cm (4,5 pouces).

17. Plaque de distributeur selon l'une quelconque des revendications précédentes, caractérisée en ce que chaque passage (24) présente une paroi (35) qui n'est pas coplanaire à aucune autre des parois divergentes de la partie de canal (25).

18. Plaque de distributeur selon l'une quelconque des revendications précédentes, caractérisée en ce qu'elle ne comporte aucun moyen additionnel de canalisation de fluide pour mieux favoriser la distribution du fluide.

19. Plaque de distributeur selon l'une quelconque des revendications précédentes, caractérisée en ce que la longueur de chaque passage (24) est égale ou supérieure à son rayon hydraulique normal au point où elle rejoint l'entrée ou la sortie (12).

20. Dispositif de cellule électrochimique du type filtre-presse, comprenant une ou plusieurs unité de cellules placées dans un cadre, chacune comprenant deux électrodes ou plus et une ou plusieurs plaques de distributeur de fluide (11) selon l'une quelconque des revendications précédentes.

21. Dispositif de cellule selon la revendication 20, caractérisé en ce que au moins une électrode, placée dans une unité, est une électrode à surface augmentée, maintenue dans l'orifice central (15) de la plaque de distributeur (11).

22. Dispositif de cellule selon la revendication 20, caractérisé en ce que les électrodes comprennent des plaques d'électrodes plates (18, 21) ayant la plaque de distributeur (11) positionnée entre elles, chacune des plaques d'électrodes (18, 21) présentant, en son sein, un orifice (47) aligné par rapport à une entrée ou une sortie (12) de l'un des canaux coniques (14) situés dans la plaque de distributeur (11), pour former un passage s'étendant transversalement aux plaques (11, 18, 21) et faisant partie d'un système de distribution interne destiné à l'écoulement du fluide dans ladite unité de cellule, à partir d'une source d'alimentation extérieure.

23. Dispositif de cellule selon la revendication 22, caractérisé en ce qu'une ou plusieurs desdites unités de cellule comprend en plus une seconde plaque de distributeur de fluide (11), tournée de 180° par rapport à la dite première plaque de distributeur (11), de sorte qu'une première entrée ou sortie (58) située dans la seconde plaque de distributeur, soit alignée par rapport à une seconde entrée ou sortie (61) de la première plaque de distributeur (11), de façon que les canaux coniques (14) de chaque plaque de distributeur fassent partie d'un système de distribution séparé destiné à l'écoulement de fluides séparés passant par lesdites unités de cellule, en provenance de sources d'alimentation séparées et extérieures.

24. Dispositif de cellule selon la revendication 23, caractérisé en ce que chacune desdites unités de cellule présentant une seconde plaque de distributeur (11) comprenant, en plus, une plaque de séparateur (55) positionnée entre lesdites plaques de distributeur (11) juxtaposées, afin de séparer les deux compartiments d'électrode (56, 57), cette plaque de séparateur présentant, en son sein, des trous (58, 61) s'alignant par rapport aux premières et secondes entrées ou sorties (58, 61), situées dans la plaque de distributeur et les orifices situés dans les plaques d'électrode afin de compléter le système de distribution interne de chaque unité de cellule.

25. Dispositif de cellule selon l'une quelconque des revendications 22 à 24, caractérisé en ce qu'il comprend, en outre, au moins une plaque d'espacement (54) destinée à être positionnée entre une plaque de distributeur (11) et une plaque d'électrode (53), la ou chaque plaque d'espacement comprenant un orifice central (62) et des orifices (58, 61) s'alignant par rapport audit orifice central (15) correspondant et aux premières et secondes entrées et sorties (58, 61), situées dans ladite plaque de distributeur (11) adjacente.

26. Dispositif de cellule selon la revendication 25, caractérisé en ce qu'il comprend, en plus, au moins une plaque d'espacement additionnelle (54) destinée à être positionnée entre une plaque de distributeur (11) et une plaque de séparateur (55).

27. Dispositif de cellule selon les revendications 24 à 26, caractérisé en ce qu'il comprend une certaine quantité de matériau sur une surface à haut conducteur remplissant au moins l'un des compartiments d'électrode (56, 57) situé dans au moins l'une des unités de cellule, constituant de cette manière un arrangement de cellule de type filtre-presse à lit à garnissage.

28. Dispositif de cellule selon la revendication 27, caractérisé en ce qu'il comprend, en plus, des moyens incluant un orifice de canal susceptible d'être fermé de manière étanche, dans au moins l'une des pièces d'espacement (24), plaques d'électrode (53) ou de distributeur (11) situées dans une unité de cellule, afin d'introduire ledit matériau dans lesdits compartiments d'électrode (56, 57) définis de cette manière.

29. Dispositif de cellule selon la revendication 22, caractérisé en ce qu'il comprend, de plus, des moyens incluant une certaine quantité de matériau sur une surface à haut conducteur située dans l'orifice central (15) et une plaque de séparateur (55) située entre ladite plaque de distributeur (11) et l'une des plaques d'électrode (53) situées dans une unité de cellule, afin de constituer en son sein un arrangement de cellule de type filtre-presse à lit à garnissage.

30. Dispositif de cellule selon la revendication 20, dépendante de la revendication 7, caractérisé en ce que l'entrée ou la sortie (12) de chaque passage (24) et les secondes entrées ou sorties (45) situées dans les plaques de distributeur (11) sont symétriques par rapport aux trois axes de rotation passant par le centre de la plaque de distributeur (11), les plaques d'électrode présentant chacune des orifices (47, 48) alignés par rapport à chaque entrée ou sortie (12) et des secondes entrées ou sorties (45) situées dans la plaque de distributeur.

31. Dispositif de cellule selon la revendication 20, dépendante de la revendication 10, caractérisé en ce que les plaques d'électrode (53) sont également de configuration généralement rectangulaire.

32. Dispositif de cellule selon la revendication 22, caractérisé en ce qu'il comprend plus d'une des unités de cellule juxtaposées avec des plaques de distributeur (11) adjacentes, partageant une plaque d'électrode communie (17, 18, 53) positionnée de manière intermédiaire.

FIG. 1

FIG. 2

FIG. 3

FIG. 4

EP 0 122 736 B1